# EUROPEAN PATENT APPLICATION

(11) **EP 1 291 300 A2**
(43) Date of publication of application: **12.03.2003**
(21) Application number: 02256131.0
(22) Date of filing: 04.09.2002
(51) Int. Cl.: B65D 81/38

(54) **Multi-layer core for vacuum insulation panel and insulated container including a vacuum insulation panel**

(30) Priority: 05.09.2001 US 317298 P; 11.12.2001 US 339278 P; 03.09.2002 US 233859
(71) Applicant: Energy Storage Technologies, Inc., Dayton, Ohio 45459 (US)
(72) Inventor: Gokay, Cem, Centerville, Ohio 45458 (US); Meyer, Chris, Xenia, Ohio 45385 (US); Wynne, Nicholas, Hillard, Ohio 43026 (US); LaLonde, Roger, San Diego, California 92123 (US); Olivera, Abel, San Diego, California 92111 (US); Ruiz, Jaime, San Diego, California 92139 (US); Schneider, Rick, San Diego, California 92117 (US)
(74) Representative: Keltie, David Arthur

(57) **Abstract**

A multi-layer core for use in a vacuum insulation panel and an insulated container (30) utilizing a vacuum insulation panel (44) containing the multi-layer core is provided. The multi-layer core includes at least a first layer of a heat resistant material and a second layer of a material which is less heat resistant than the first layer or which has a lower melting point than the first layer. The core preferably includes a third layer comprising a heat resistant material. The second layer preferably comprises an open cell foam, and the first and third layers preferably comprise a silica material. A vacuum insulation panel (44) which includes the multi-layer core is preferably provided in an insulated container including exterior and interior walls which form a pocket into which the vacuum insulation panel may be inserted. The container (30) may be used to store and/or transport a variety of temperature sensitive items such as food, medicines, and the like.

## Description

### BACKGROUND OF THE INVENTION

The present invention relates to a multi-layer core for use in a vacuum insulation panel as well as an insulated container which utilizes a vacuum insulation panel containing the multi-layer core. The insulated container may be used to ship food and other temperature sensitive items while maintaining their desired temperature.

For delivery of food and other products, thermally insulated containers such as boxes and thermal bags are commonly used to keep items such as food warm or cold while they are transported from one place to another. Typically, these bags and boxes are formed from fabric or films which include a heat reflective material on their inner surfaces.

Vacuum insulation panels (VIPs) are known for use in insulating various containers where it is desirable to maintain the temperature of food and other items within desirable temperature limits during delivery. For example, insulated vacuum panels have been used in shipping containers, coolers, and refrigerated cargo areas of vehicles such as trucks, trains, planes, etc. Vacuum insulation panels are also employed in the storage and transport of temperature-sensitive materials such as medicines, vaccines and the like. Such vacuum insulation panels typically comprise a membrane or barrier film which forms the walls of the VIP and which keeps out gases and vapors; and a core material which provides physical support to the membrane or barrier film envelope and reduces heat transfer between the walls of the VIP. Examples of such vacuum insulation panels are described in U.S. Patent Nos. 5,950,450, 5,943,876 and 6,192,703, the disclosures of which are hereby incorporated by reference. Vacuum insulation panels have typically been used in containers which include additional active or passive means of adding or removing heat energy, such as a refrigeration/heating unit and/or phase change materials, which function to maintain the desired temperature. However, it would be desirable to be able to use vacuum insulation panels in simpler forms of containers which do not require additional heating or cooling units, for the transportation of hot or colds foods.

It would also be desirable to provide a vacuum insulation panel having a core which provides improved heat resistant properties. Typically, core materials used in vacuum insulation panels comprise microporous foams, silica powders, or variations thereof as described in U.S. Patent Nos. 5,843,353, 4,636,415, and 6,132,837, the disclosures of which are hereby incorporated by reference. However, because the barrier film is thin, it provides no significant insulation barrier to applied heat other than radiant heat where the barrier film is metalized or contains a metal foil. As a result, temperatures are transferred almost directly to the surface of the core material within the barrier film skin. When some foams are used as the core material under high temperature conditions, the foam cores soften and collapse. One attempt to resolve this problem has involved placing a layer of exterior insulation on the panel to protect the core from brief transient exposure to high temperatures. See, for example, U.S. Patent No. 6,106,449 and U.S. Patent No. 6,244,458. However, a problem still remains when one side of the foam core is exposed to slow transient temperatures or equilibrated exposure to changes in temperature which result in temperatures within the vacuum insulation panel that are too high for the foam core to maintain rigidity. While this problem can be mitigated by relatively thick applications of conventional insulation, the use of such insulation adds additional cost and negates the space savings provided by the use of vacuum insulation panels.

While silica powder materials may be used in vacuum insulation panels to provide heat resistance, they are difficult to use in panels having non-planar geometries. Even in silica powder products which contain fibers to help maintain their shape, it is difficult to maintain satisfactory dimensional tolerances in any shape other than flat panels because the silica powder core flows slightly, and even in flat panel form is easily deformed. Another heat resistant material is glass fiber matting; however, this material is more expensive than foams.

Accordingly, there is still a need in the art for an improved core for use in a vacuum insulation panel that exhibits improved heat resistant properties. There is also a need in the art for an improved insulated container that can be used for commercial and consumer applications.

### SUMMARY OF THE INVENTION

The present invention meets that need by providing a multi-layer core for use in a vacuum insulation panel which provides heat resistant properties when exposed to slow transient heat or an equilibrated temperature drop. Vacuum insulation panels including the multi-layer core are lightweight and cost efficient to produce. The present invention also provides an insulated container such as a bag or box which can be manufactured in various sizes and which contains in its walls vacuum insulation panels utilizing the multi-layer core. The vacuum insulation panels can be used to increase the heat or cold retention of items contained in the container. The container may optionally include a heating or cooling unit to help maintain the desired temperature of the items.

In accordance with one aspect of the present invention, a multi-layer core for use in a vacuum insulation panel is provided comprising a first layer of a heat-resistant material and a second layer comprising a material which is less heat resistant than the material comprising the first layer or a material having a lower melting point than the material comprising the first layer. The multi-layer core also preferably includes a third layer comprising a heat-resistant material.

Preferably, the second layer comprises a foam core, and lies between the first and third layers. The foam core is preferably comprised of an open-cell foam. The heat-resistant material comprising the first and third layers is preferably selected from the group consisting of a microporous open cell silica aerogel, precipitated silica, fumed silica, glass fiber mats, ceramic fiber mats, and a heat resistant open-cell foam. The heat resistant material is preferably about 1/16 to 1/4 inch thick.

The multi-layer core may be used in a vacuum insulation panel formed by enclosing the multi-layer core within a flexible envelope followed by evacuation and sealing. The resulting vacuum insulation panel preferably has an R value per inch of between about 10 and 60 (units of (ft.²/hr./°F)/(Btu-in.)). The insulated vacuum panel may then be incorporated in an insulated container for maintaining the temperature of temperature sensitive items such as food.

In accordance with another embodiment of the invention, an insulated container is provided comprising first, second, third and fourth sidewalls, a bottom wall, and a top wall, wherein at least one of the walls includes an exterior wall and an interior wall which form a pocket adapted to receive a vacuum insulation panel therein which includes a multi-layer core as described above. In one preferred embodiment, each of the walls includes a pocket formed by the exterior and interior walls which includes a vacuum insulation panel. In this embodiment, the container preferably has an R value of about 20 (units of (ft.² /hr./°F)/(Btu-in.)) in a thickness space of about 1 inch or less.

The exterior and interior walls forming the pocket (with the vacuum insulation panel inserted therein) are preferably sealed. The walls may be sealed so as to permanently enclose the panels or they may incorporate zippers or other means to allow for removal or replacement of the panel.

The exterior and interior walls of the container are preferably comprised of a fabric selected from nylon, rayon and canvas but may comprise any other suitable fabric. Alternatively, the interior wall may be comprised of a non-permeable barrier material selected from vinyl, polyethylene, metalized thermal radiation barrier film, radiation reflecting film, and foil-based radiation barriers.

The container may be provided in a number of forms, such as a box or a bag. Where the container comprises a box, the top wall of the container may be in the form of a removable lid.

In another embodiment of the invention, the insulated container includes a shelf assembly therein comprising at least one shelf for storage of multiple items. For example, the container may be configured to hold one or more pizza boxes. The container can also be configured, for example, to transport both hot and cold foods by separating the foods in different compartments of the same bag/box. Straps or handles may be affixed to the side, bottom, tops or ends of the bag to aid in carrying the bag during delivery.

The insulated container may be used to store and/or transport items at a wide variety of temperatures. The container may be used to store temperature sensitive items at a temperature range of from about 0°C to about 100°C, or at cooler temperatures ranging from about ―55°C to 0°C.

If desired, the container may include a heating or cooling source along with a vacuum insulation panel to aid in retaining the temperature of items in the container. The optional heating or cooling source preferably comprises a disc containing a preconditioned phase change material, but may comprise any source capable of providing heat or cold to items stored in the container. For example, one wall of the container may include a pocket containing a vacuum insulation panel therein and another wall may include a pocket containing a heating or cooling source therein.

The container of the present invention may be used for commercial as well as consumer applications. Commercial applications include hot or cold food transport such as the transport of meals to homes, institutions, job sites, and public events where it is necessary to maintain constant temperature control of foods. The container could also be used to carry fresh fruits, vegetables, flowers, and meats in airline cargo holds. The container may also be used to transport temperature sensitive products for the health industry, such as test specimens, blood, organs, or tissue.

Accordingly, it is a feature of the present invention to provide multi-layer core for use in a vacuum insulation panel, and to a container utilizing such a vacuum insulation panel for transporting temperature sensitive items that retains the temperature of the items during transport.

### BRIEF DESCRIPTION OF THE DRAWINGS

Fig. 1 is a perspective view illustrating the layers in the multi-layer core of the present invention;
Fig. 2 is a perspective view illustrating the assembled multi-layer core;
Fig. 3 is a perspective view of a vacuum insulation panel containing the multi-layer core;
Fig. 4 is a perspective view of a container in the form of a box incorporating vacuum insulation panels in accordance with the present invention;
Fig. 4A is a perspective view of a shelf assembly for use in the container shown in Fig. 4;
Fig. 5 is a perspective view of a container in the form of a bag incorporating vacuum insulation panels in accordance with the present invention; and
Fig. 6 is a graph illustrating the insulation properties provided by a vacuum insulation panel including the multi-layer core of the present invention.

### DETAILED DESCRIPTION OF THE INVENTION

The multi-layer core of the present invention provides several advantages over prior art VIP cores. By utilizing a foam core sandwiched between heat resistant silica based materials, the resulting core exhibits a high R value while preventing internal temperature extremes which could soften the foam core.

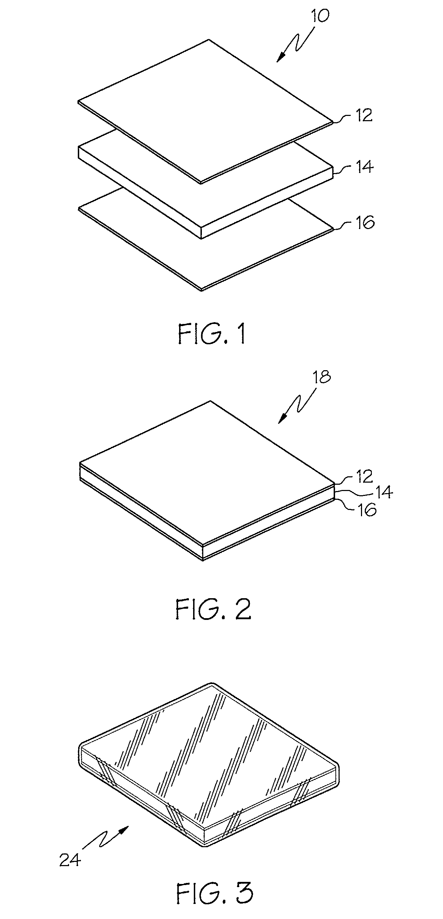

Referring now to Figs. 1 to 3, a multi-layer core 10 for use in a vacuum insulation panel is shown. The multi-layer core includes a first layer 12 comprising a heat resistant core material, a second layer comprising a foam core 14 which is less heat resistant than the first layer, and a third layer 16 comprising a heat resistant core material. As shown, the foam core 14 is sandwiched between the first and second layers 12 and 16. Fig. 2 illustrates an assembled multi-layer core structure 18 suitable for use in a vacuum insulation panel.

The preferred foam for use as the foam core 14 is a low density open cell foam. Preferred open cell foams for use in the present invention include Dow Instill™, commercially available from Dow Chemical Company. This foam is a compressed polystyrene foam of about 5.0 to 9.0 lbs/ft³ density. ICI polyurethane small cell size open cell foam, commercially available from ICI Chemicals, can also be used. This foam has a density of about 4 lbs/ft³. Preferably, a Dow Instill™ vacuum insulation core of 15 mm thickness is used to obtain a final panel thickness of about 1 inch. If desired, the foam core may be grooved to allow for improved evacuation of the foam core material.

The heat resistant materials 12, 16 may comprise a microporous, open cell silica aerogel, a precipitated or fumed silica, or a glass microfiber mat material. The material can also be made from a heat resistant foam material of appropriate density and small cell size, such as open cell urethane precipitated foams comprised of small monodispersed spheres. The heat resistant materials 12, 16 are preferably each about one quarter of an inch thick and are placed on one or both sides of the foam core board 14. Most preferably, 1/8 of an inch thick Nanogel™ panels are used, commercially available from Nanopore Corporation. Also preferred for use are 1/8 inch thick pure glass fiber mat panels. These silica-based materials protect the temperature sensitive foam core material from extensive heat that may cause softening of the core. The silica material may also be dried to function not only as a protective insulation layer but also as a desiccant for the foam core. If desired, the heat resistant materials 12, 16 may comprise different materials selected from the suitable materials described above.

Due to the thinness of the heat resistant core materials 12, 16, they are preferably evacuated in the same envelope as the foam core so that they are supported by the foam when forming a vacuum insulation panel. The exterior dimensions of the resulting vacuum insulation panel are changed very little. For example, to make a 1 inch panel, the foam core could be crushed to 7/8 inch thickness to accommodate a single layer of 1/8 inch glass fiber mat, resulting in a total thickness of 1 inch.

The thickness of the heat resistant core materials 12, 16 provides an internal temperature drop within the vacuum panel required to protect the foam core. The heat resistant materials 12, 16 are able to provide an R value of about 5 to 10 (units of (ft.²/hr./°F)/(Btu-in.)) per 1/8 inch layer. When used on both sides of an Instill™ foam core, a total R value in the completed core assembly is between about 20 and about 100 per inch.

It should be appreciated that it is possible to use a heat resistant material on only one side when making the assembled multi-layer core 18. However, it is preferable to use heat resistant materials on both sides of the foam core 14 to provide protection to both sides of the foam core and to ensure that it is reversible when installed and can't be accidentally mis-oriented.

The assembled multi-ply core 18 is preferably enclosed within a flexible envelope and evacuated and sealed to form a vacuum insulation panel. The flexible envelope is typically prepared from a flexible multi-layer film containing at least one layer which exhibits good gas barrier properties and at least one layer which exhibits good water vapor barrier properties. Any flexible polymeric film which possesses the requisite gas and water barrier properties can be used as the envelope structure. A particularly effective polymeric film for use as the envelope is a heat-sealable, co-extruded, multi-layer material which comprises at least one heat-sealable layer, at least one polyethylene terephthalate (PET) layer, at least one polyvinylidene chloride and at least one polyvinyl alcohol layer. Preferably, at least one of the polyethylene terephthalate layers has an aluminum gas and vapor barrier evaporated on at least one surface thereof or includes a layer of ultra-thin (typically 5 or 6 microns) aluminum foil. Preferred materials for use as the envelope are MYLAR 250 SBL 300, available from DuPont or Toyo SA-6, available from Toyo Aluminum K.K.

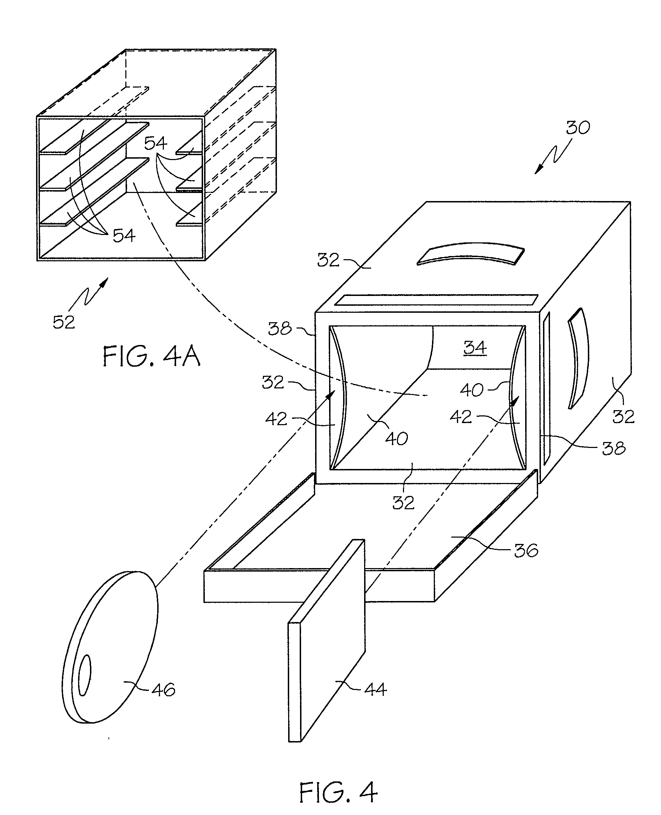

Once the multi-layer core is placed in the flexible envelope, it is evacuated and sealed to form a vacuum insulation panel 20 as shown in Fig. 3. The vacuum insulation panel is preferably surfaced on each side with a protective sheet (not shown). The protective sheets shield the sides of the vacuum insulation panel against physical abuse. A preferred protective sheet is made from polypropylene, which provides a low thermal conductivity and good touch protection for the entire panel. Another suitable protective sheet can be made from polyurethane. The vacuum insulation panel is then packaged in a conforming bag which ensures that the insulated panel will remain intact. The bag is preferably clear so that the vacuum panel integrity can be observed from the panel edge. The entire panel thickness is typically about one inch thick or less.

Alternatively, the evacuated and sealed vacuum insulation panel may be surfaced with a sheet comprised of conventional insulation. This sheet comprises a non-vacuum insulation panel whose profile protects the side(s) of the vacuum insulation panel (VIP) and may typically be comprised of ½ inch polyurethane foam and will be either bonded to or placed against the exterior of the VIP, and may be enclosed by the conforming bag together with the VIP.

The vacuum insulation panels, including the multi-layer core of the present invention, provide insulating properties which are useful in highly insulated containers which allow the safe storage and transportation of a number of items such as food, medicines such as vaccines, antibodies, etc. However, it should be appreciated that the vacuum insulation panel is not limited to use in containers. The vacuum insulation panel can also be used with any apparatus used to maintain temperature sensitive items such as food at hot or cold temperatures. For example, hospital or nursing home food may be placed under a cover formed from the insulated vacuum panel for transport by cart to patients. Also, hot water pans that surround and cover food may be made with the vacuum insulation panels. The vacuum insulation panels can also be used in vending equipment to keep water hot for brewing coffee or tea, or to separate hot and cold products within the same vending machine.

The vacuum insulation panels can also be used in construction applications to provide insulation in ceilings and walls of houses, office buildings, hotels, motels, factories, warehouses, etc. The vacuum insulation panels can also be used with common appliances such as refrigerators, stoves, hot water heaters, motor vehicles, heating and cooling ducts, etc.

The vacuum insulation panels can be used in hot water heaters to help improve energy efficiency. Even at higher temperatures, a hot water heater may be maintained near the boiling point of water for commercial dishwashing and laundry application, especially in conjunction with high temperature phase change materials.

The vacuum insulation panels can be used in the construction of heating elements such as distributed heat floor heating elements, wall heating elements, or ceiling heating elements. The power required from the heating elements is reduced due to the high value insulation, greatly reducing the heat loss to other areas it is not intended to heat.

Further, the vacuum insulation panels can be used with laboratory equipment to maintain temperatures at or around the boiling point of water, thereby making it easier to maintain crucial temperatures. For example, the vacuum insulation panel may be formed in a vessel to serve as a substitute for fragile glass.

In a preferred embodiment, the vacuum insulation panel including the multi-layer core of the present invention is used in a container such as a delivery box or pouch for the transport of temperature sensitive items. As illustrated in Fig. 4, a container 30 is shown in the form of a delivery box. The box preferably comprises four side walls 32, a bottom wall 34, and a top wall 36. As shown in Fig. 4, the top wall 36 forms a lid. As shown, two of the sidewalls 32 each include an exterior wall 38 and an interior wall 40 which form a pocket 42 which allows the insertion of a vacuum insulation panel 44 or a heating or cooling source 46 to be inserted therebetween. The pocket 42 may then be closed or sealed, if desired.

The exterior and interior walls may be comprised of a number of suitable materials such as fabrics including, but not limited to, nylon, rayon and canvas. Alternatively, the interior wall may be comprised of a non-permeable barrier material including, but not limited to, vinyl, polyethylene, metalized thermal radiation barrier film, radiation barrier films and other food packaging films.

The heating or cooling source 46 may be in the form of a disc which includes a preconditioned phase change material as described in commonly-assigned U.S. Patent Nos. 5,884,006 and 6,108,489, the disclosures of which are hereby incorporated by reference. Alternatively, the source may comprise a resistive type heater. The heating or cooling source functions to maintain, raise, or lower the temperature of an item in the container. However, it should be appreciated that the container of the present invention often provides sufficient temperature retention such that external or internal heating or cooling sources are not required.

In a preferred embodiment of the invention, the interior of the container is divided into separate compartments, or shelves, so that both hot and cold items can be stored in the same box while maintaining the temperature of both items. For example, the container may be provided with a shelf assembly 52 including multiple shelves 54 as shown in Fig. 4A which allows several items such as multiple pizza boxes or food trays to be carried in the same container. It should be appreciated that the number of shelves may be varied as desired and that the design of the shelf assembly may vary.

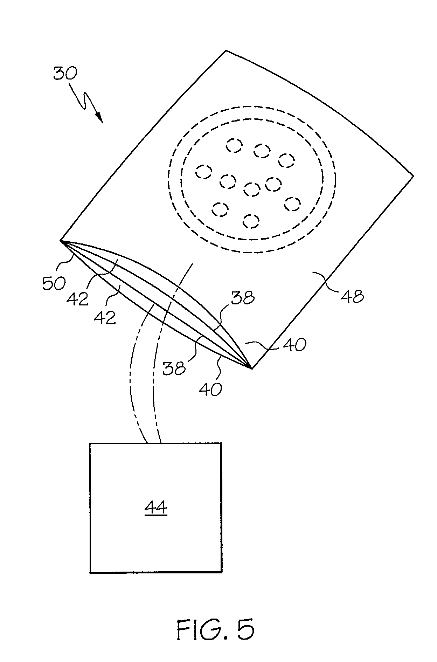

Fig. 5 illustrates the container 30 of the present invention in the form of a delivery bag, such as an insulated bag for pizza delivery. As shown, the container includes top and bottom walls 48 and 50, each of which include exterior and interior side walls 38, 40 which form pockets 42 for holding a vacuum insulation panel 44 or a heating or cooling source (not shown).

In order that the invention may be more readily understood, reference is made to the following examples which are intended to illustrate the invention, but not limit the scope thereof.

### Example 1

An insulated pizza delivery bag was formed in accordance with the present invention and included a cloth exterior with pockets on the top and bottom walls holding vacuum insulation panels. The vacuum insulation panels had polypropylene sheet covers. The side walls of the bag utilized conventional insulation.

The pizza bag was then tested for heat retention. In the first test, the bag was maintained at ambient temperature prior to insertion of the pizza, while in the second test, the bag was preheated prior to insertion of the pizza. The results are shown below in Tables 1 and 2.

**Table 1**

| Time (minutes) | Pizza 1 cheese (°F) | Pizza 1 crust (°F) | Pizza 2 cheese (°F) | Pizza 2 crust (°F) | Pizza 3 cheese (°F) | Pizza 3 crust (°F) |
|---|---|---|---|---|---|---|
| 0 | 173.4 | 185.4 | 78.5 | 81 | 78.6 | 77.9 |
| 5 | 177.3 | 175.4 | 198.8 | 195.4 | 188.4 | 183.7 |
| 10 | 178.3 | 166.8 | 195.1 | 187.3 | 193.9 | 190 |
| 15 | 176.2 | 164 | 191.8 | 180.5 | 189.4 | 182.9 |
| 20 | 174.3 | 162.2 | 188.4 | 175 | 186.3 | 177.3 |
| 25 | 172.6 | 160.4 | 184.7 | 171 | 183 | 173.3 |
| 30 | 171.6 | 158.9 | 181.7 | 168.3 | 180.2 | 171.3 |

**Table 2**

| Time (minutes) | Pizza 1 cheese (°F) | Pizza 1 crust (°F) | Pizza 2 cheese (°F) | Pizza 2 crust (°F) | Pizza 3 cheese (°F) | Pizza 3 crust (°F) |
|---|---|---|---|---|---|---|
| 0 | 129.7 | 133.3 | 102.8 | 114.5 | 102.8 | 103.5 |
| 5 | 189.5 | 187.4 | 205 | 188 | 205 | 195.6 |
| 10 | 183.2 | 180.2 | 197 | 177 | 197.1 | 186.2 |
| 15 | 180.5 | 176.4 | 192 | 171.8 | 192 | 182.7 |
| 20 | 178.5 | 173.8 | 188.2 | 168.3 | 188.2 | 180.4 |
| 25 | 176.6 | 171.1 | 184.8 | 165.2 | 184.8 | 178.1 |
| 30 | 174.6 | 168.8 | 181.3 | 162.4 | 181.6 | 176 |

As can be seen, the temperature of the pizza was effectively retained with use of the bag of the present invention.

### Example 2

Insulated pizza delivery bags were formed in accordance with the present invention and included vacuum insulation panels in the pockets of the top and bottom sidewalls. One bag utilized vacuum insulation panels comprising conventional polyurethane foam insulation (25 mm thick) and the other bag utilized vacuum insulation panels comprising the multi-layer core of the present invention (25 mm thick). A heat source approximating the temperature of a pizza was placed in a pizza box, then the box with the heat source was placed inside the bag, and the temperatures were allowed to equalize for almost an hour.

Temperature data was collected from temperature sensors placed in the center of the top of the pizza bag, one on the outer side of the upper insulation panel, and one on the inner side of the upper insulation panel. The ambient temperature was also monitored and was about 73°F.

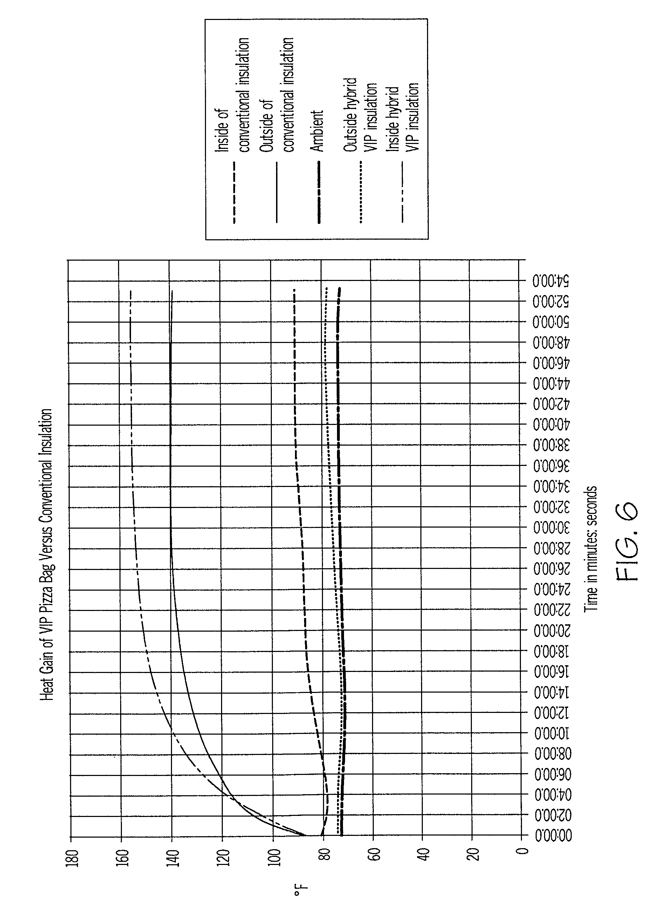

The inside of the conventional insulation only reached about 140°F, and heat escaping through this insulation heated its exterior to 91°F. Under these same conditions, the vacuum insulation panel comprising the multi-layer core was heated to 155°F on the inside and lost only enough heat to raise its exterior surface to 78°F. As can be seen below in Fig. 6, the vacuum insulation panel of the present invention provides a substantial improvement in insulation performance. It should be noted that in both bags, the pizza heat source was about 15° higher than the inside of the insulation due to the insulation effects of the boxes and several inches of air gap. This means that the temperature of the pizza in the conventionally insulated bag was about 155°F while the pizza in the multi-layer core VIP insulated bag was about 170°F, a noticeably better starting temperature for serving.

The temperature of the vacuum insulation panel containing the multi-layer core was also measured and had an internal temperature of 155°F. The second layer comprised 15 mm of Instill™ capable of withstanding 140°F temporarily without distorting. The middle portion of the core had an R value of about 15, while the outer layers of silica material each had an R value of about 5, for a total R value of 25. The temperature difference from inside to out was 155°F - 78°F=77°F. 77°F/25R=3.08°F/R. The silica layers dropped the temperature by 3.08°F/R x 5R = 15.4°F before it got to the surface of the Instill™. Thus, the Instill™ was exposed to a peak temperature of 155°F - 15.4°F or 139.6°F, a safe temperature for intermittent exposure for this material without producing significant permanent warping.

It will be apparent to those skilled in the art that various changes may be made without departing from the scope of the invention which is not considered limited to what is described in the specification.

## Claims

1. A multi-layer core for use in a vacuum insulation panel comprising:
a first layer comprising a heat-resistant material and a second layer comprising a material which is less heat resistant than said material comprising said first layer or which has a lower melting point than said material comprising said first layer.

2. The multi-layer core of claim 1 including a third layer comprising a heat-resistant material.

3. The multi-layer core of claim 1 wherein said second layer comprises a foam core.

4. The multi-layer core of claim 2 wherein said second layer lies between said first and third layers.

5. The multi-layer core of claim 1 wherein said second layer comprises an open-cell foam.

6. The multi-layer core of claim 2 wherein said first and third layers comprise a heat-resistant material selected from the group consisting of a microporous open cell silica aerogel, precipitated silica, fumed silica, glass fiber mats, ceramic fiber mats, and open-cell foam.

7. The multi-layer core of claim 6 wherein said heat-resistant material is about 1/16 to 1/4 inch thick.

8. A vacuum insulation panel comprising the multi-layer core of claim 2.

9. The vacuum insulation panel of claim 2 having an R value of between about 10 and 60.

10. An insulated container comprising:
first and second sidewalls, a bottom wall, and a top wall; wherein at least one of said walls includes an exterior wall and an interior wall which form a pocket having a vacuum insulation panel therein; said vacuum insulation panel comprising a multi-layer core, said multi-layer core including a first layer comprising a heat resistant material, a second layer comprising a material which is less heat resistant than the material comprising said first layer or which has a lower melting point than the material comprising said first layer, and a third layer comprising a heat resistant material.

11. The insulated container of claim 10 wherein said heat-resistant material is selected from the group consisting of a microporous open cell silica aerogel, precipitated silica, fumed silica, glass fiber mats, ceramic fiber mats, and open-cell foam.

12. The insulated container of claim 10 wherein said exterior wall is comprised of a fabric selected from nylon, polyester, and canvas.

13. The insulated container of claim 10 wherein said interior wall is comprised of a fabric selected from nylon, polyester, and canvas.

14. The insulated container of claim 10 wherein said interior wall is comprised of a non-permeable barrier material selected from vinyl, polyethylene, metallized thermal radiation barrier film, radiation reflecting film, or a foil-based radiation barrier or reflector.

15. The insulated container of claim 10 wherein each of said walls includes said pocket.

16. The insulated container of claim 15 having an R-value per inch of at least 10.

17. The insulated container of claim 10 wherein said top wall comprises a removable lid.

18. The insulated container of claim 10 wherein said pocket including said vacuum insulation panel therein is sealed.

19. The insulated container of claim 10 including a shelf assembly therein comprising at least one shelf for storage of multiple items.

20. The insulated container of claim 10 comprising a box or pouch for storage of temperature sensitive items at a temperature from about 0°C to about 100°C.

21. The insulated container of claim 10 comprising a box or pouch for storage of temperature sensitive items at a temperature from about ―55°C to 0°C.

22. The insulated container of claim 10 wherein at least one of said walls includes a pocket containing a vacuum insulation panel therein and at least one of said walls includes a pocket containing a heating or cooling source therein.

23. The insulated container of claim 22 wherein said heating or cooling source comprises a disc containing a preconditioned phase change material.
